# EUROPEAN PATENT SPECIFICATION

(11) **EP 1 266 190 B1**
(45) Date of publication and mention of the grant of the patent: **11.11.2009**
(21) Application number: 01917408.5
(22) Date of filing: 15.03.2001
(51) Int. Cl.: G01C 22/00, A63B 24/00, A63B 69/00, A43B 5/06

(54) **AN EXERCISE MONITORING APPARATUS**
VORRICHTUNG ZUR ÜBUNGSÜBERWACHUNG
DISPOSITIF DE SURVEILLANCE D'ENTRAINEMENT

(30) Priority: 15.03.2000 IE 000207; 15.12.2000 IE 001008
(43) Date of publication of application: 18.12.2002
(73) Proprietor: O'Brien, Conor, Dublin 2 (IE)
(72) Inventor: O'Brien, Conor, Dublin 2 (IE)
(74) Representative: Brophy, David Timothy
(86) International application number: PCT/IE2001/000035
(87) International publication number: WO 2001/069179

(56) References cited:
- WO-A-99/44016
- US-A- 4 371 945
- US-A- 4 578 769
- US-A- 5 471 405
- US-A- 5 524 637
- US-A- 5 899 963

## Description

This invention relates to an exercise monitoring apparatus.

WO 99/44016 discloses a system for measuring the speed of a person while walking or running. An acceleration sensor mounted in a shoe provides an acceleration signal which is processed to determine stride length and stride duration, and thereby the speed and distance traversed. This information is transmitted in form of information bytes to a wrist-worn unit allowing the speed, distance and other calculated information, such as calories consumed, to be displayed to the user.

According to the present invention there is provided an exercise monitoring apparatus comprising a component arranged to be worn on a foot of a subject whose exercise is to be monitored, the component including a sensor for generating a signal which varies according to the activity of the foot on which the sensor is worn, means for analysing the signal to detect each footfall, and a radio transmitter for transmitting data related to the number of footfalls detected over time, the apparatus further comprising a portable radio receiver for receiving the transmitted data, the receiver further including processing means for calculating a quantity based upon the received data and a display means for displaying the calculated quantity, characterised in that the transmitter transmits a series of data packets at fixed intervals, and in that the radio receiver automatically powers up shortly before a data packet is expected and powers down afterwards.

Preferably, the component comprises an article of footwear (hereinafter referred to as a "shoe").

Alternatively, the component comprises a band in which said sensor and transmitter are located and said band is adapted to be worn on the foot of the subject. Further preferably, the band is adapted to be worn on the foot of an animal.

Preferably the radio receiver has a wristband for wearing in the manner of a wristwatch.

In a basic embodiment of the invention the transmitted signal may simply be a series of pulses each corresponding to a respective footfall detected by the sensor.

The transmitter transmits a series of short data packets at fixed intervals, for example, one burst every second, each packet specifying the number of footfalls detected since the immediately preceding packet. In particular, each packet preferably specifies the running total of footfalls detected modulo N where N is a fixed integer.

The processing means may simply count the detected footfalls defined by the received signal and display the running total on the display means, or a derivative quantity such as rate of footfall or an aerobic function may be calculated and displayed.

Embodiments of the invention will now be described, by way of example, with reference to the accompanying drawings, in which:
Fig. 1 shows an apparatus according to a first embodiment of the invention;
Figs. 2A to 2D show the circuitry in the shoe of Fig. 1;
Figs. 3A to 3D show the circuitry in the receiver of Fig. 1;
Fig. 4 is a drawing of a horse and rider employing the apparatus according to a second embodiment of the invention;
Fig. 5 shows a typical output from the piezo device in the shoe of Fig. 1; and
Figs. 6A and 6B are waveforms illustrating the operation of the apparatus.

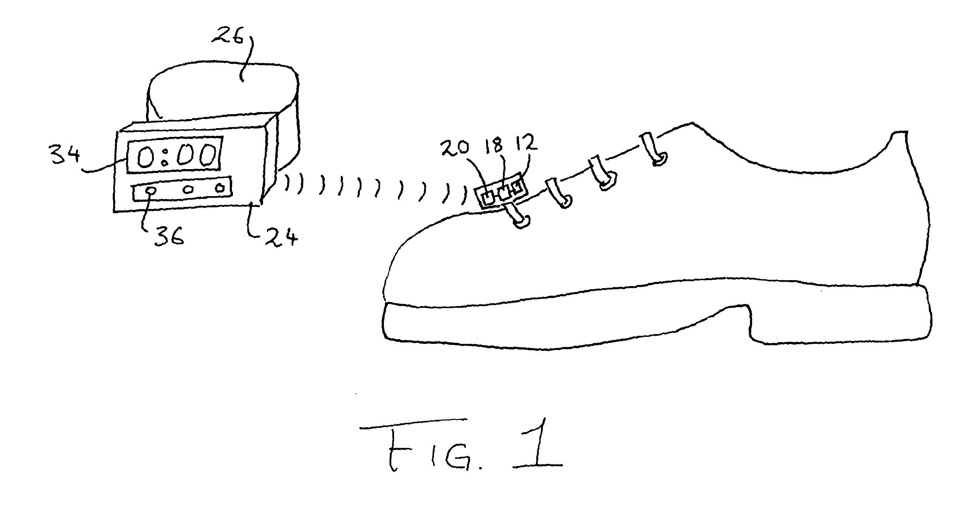

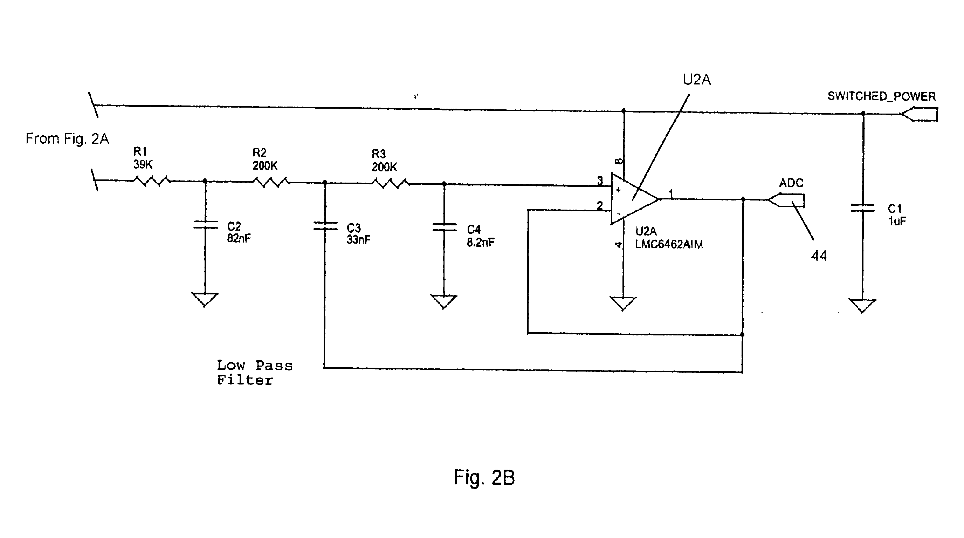

Referring to the drawings, the apparatus of Figure 1 comprises an athletic shoe 10 of the type known as a trainer. A sensor 12 is mounted on the lace of the shoe and provides an output signal which, after low pass filtering (Fig. 2B), is supplied to a microcontroller 18 also mounted in the same unit on the lace of the shoe. The sensor 12 may be any type which provides an output signal from which it is possible for the microcontroller 18 to detect the footfalls of a person wearing the shoe. Thus it may be, for example, an accelerometer, a piezoresistive or piezoelectric device, or it could be an air bladder built into the sole of the shoe operating a microswitch. The important thing is that the output signal must vary over the gait cycle of the wearer so that successive footfalls can be distinguished.

In the present embodiment the sensor 12 is an Analog Devices Accelerometer Type ADXL05. Alternatively, however, a piezoelectric wire-based sensor (not shown) may be used. This can be built into a lace of the shoe, and is essentially a coaxial cable with a piezoelectric dielectric. This primarily responds to changes in the shape of the foot as the wearer moves, such changes causing a cyclical pattern of stress on the lace and, accordingly, the sensor within.

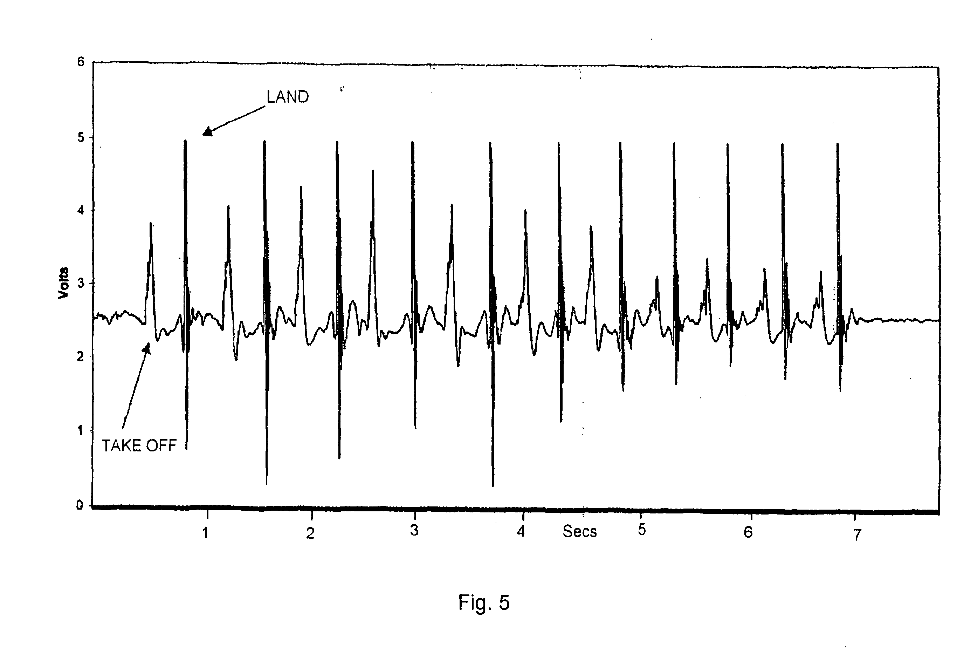

The microcontroller 18 analyses the cyclical waveform of the sensor output signal as the wearer is walking, running, etc., to detect a well-defined point on each period of the waveform, for example, the peak value. This is registered by the microcontroller 18 as a footfall by the wearer (the footfall, i.e. the point at which the foot strikes the ground, does not actually have to occur at the detected point, so long as only one such point is detected during each gait cycle of the wearer, which must, of course, include one footfall). Fig. 5 illustrates the output waveform of a typical sensor 12 while the subject is jumping. It can be seen that the take off and landing points (labelled as such in the figure) are readily identifiable and independent of the overall amplitude of the signal.

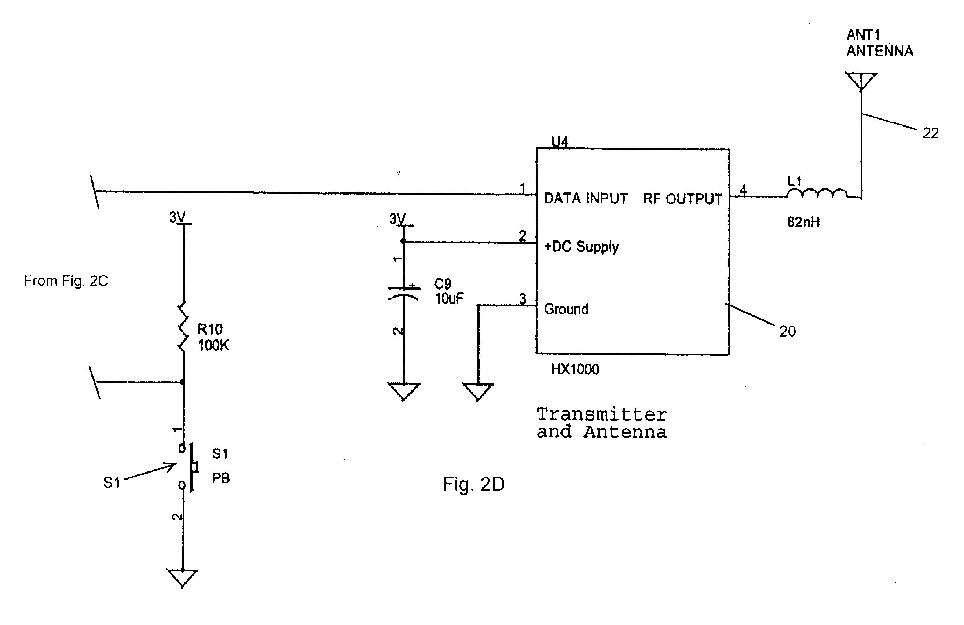

Finally the shoe 10 includes an inbuilt low power RF transmitter 20 where data including the running total of the number of detected footfalls is transmitted to a wrist unit 24 by an antenna 22, Fig. 2D. The antenna 22 may be embedded around the peripheral edge of the sole of the shoe 10, or elsewhere in or on the shoe. The wrist unit 24 has a wristband 26 so that it may be worn in the manner of a watch. The wrist unit 24 accepts the data from the foot unit, processes it using an algorithm dependent on the selected mode of operation, and displays it in the required format on a liquid crystal display (LCD) 34.

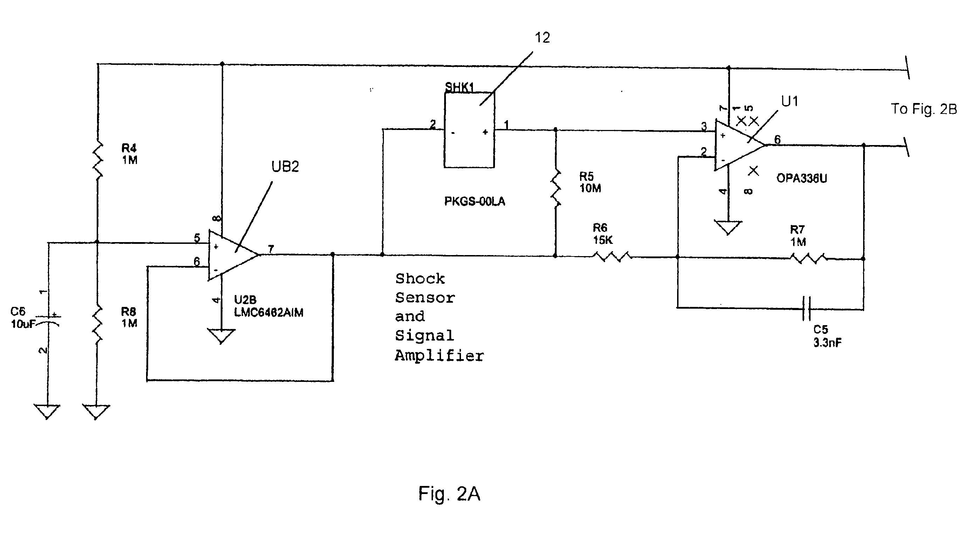

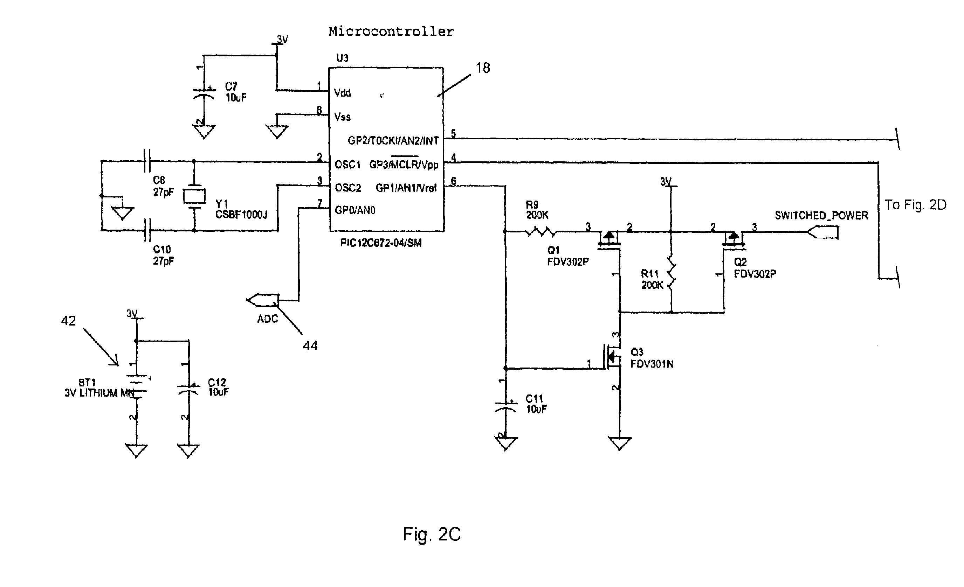

Figs. 2A to 2D shows the circuit in the shoe 10 in more detail. The circuit is powered by a single Li-Mn cell 42 (Fig. 2C). U2B and associated components (Fig. 2A) provide a "mid-rail" reference to allow the piezoelectric sensor 12 to operate in a bipolar mode - accommodating both foot falls and lifts. The sensor 12 generates small voltages as the sensor is accelerated due to foot movements, steps, jumps, etc. This signal is amplified by U1 and fed into a low pass, third order Butterworth filter, U2A and associated components (Fig. 2B). The two objectives of the filtering are (a) to reduce broadband noise and (b) eliminate mains or line noise (mains hum). A major source of mains frequency noise is due to mechanical coupling of vibration from motors and drive gear train onto the piezoelectric sensor. This is especially true when a tread mill is used.

The amplified and filtered signal is fed into an onchip 8-bit analog to digital converter 44 of the PIC microcontroller 18, Fig. 2C. As the apparatus is designed to operate as an activity detector (very low impact - walking), an ergo-meter (medium to high impact) and a jumps tester (very high impact) the sensitivity of the circuit in the shoe 10 can be adjusted to accommodate a wide range of input levels. This is accomplished by switch S1 (Fig. 2D) which functions as a manual on/off ("power down") switch and a sensitivity control (wrap around). If pressed for a short period, it is interpreted as "increment sensitivity". If pressed for a long period, e.g. several seconds, it is interpreted as a power down signal whereupon the microcontroller 18 powers down the shoe circuitry to minimize power consumption when the unit is "off". The microcontroller 18 is also programmed to automatically power down the shoe circuitry if a footfall is not detected during a predetermined relatively long time period. On power down the microcontroller 18 inserts a "power down" signal in the data sent to the wrist unit and stops execution of instructions except when "woken up" by an internal "watchdog" time circuit.

Software embedded in the microcontroller 18 performs an analysis of the digital signal, picking out where foot strikes occur and (in the case of jump tests) where the foot leaves the ground. The running total of detected footfalls is counted in a modulo-N counter, where N is a fixed integer. In the present embodiment a modulo-16 counter (0 to 15) is used to count the footfalls. The software also measures the running total of "time off the ground", i.e. the accumulation of all the time periods between the foot leaving the ground and the next foot strike. These are the time periods between the two points indicated in Fig. 5. The "time off the ground" periods are measured in units of 10msec and counted by another modulo counter, in this embodiment a modulo-200 counter (i.e. counting is over consecutive two second intervals).

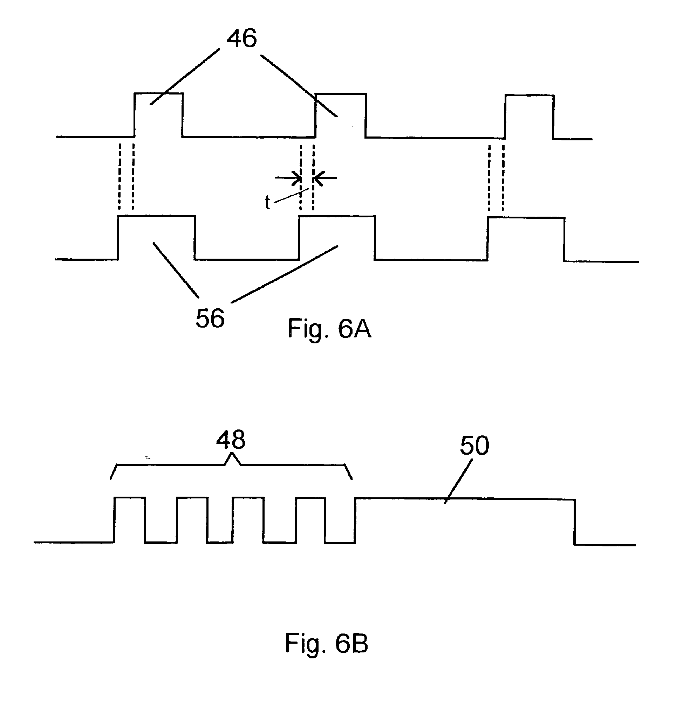

To minimise power consumption of the circuits in both the shoe 10 and the wrist unit 24, the circuit (Figs. 2A to 2D) in the shoe 10 transmits data to the wrist unit in the form of discrete data packets 46 (Fig. 6A), one per second. Each data packet (Fig. 6B) comprises a preamble 48 (consisting in this embodiment of a stream six '1's and one '0') which is used to synchronise the data packet and stabilise the wrist unit receiver after power up, and a main data-carrying portion 50. The latter contains digital data defining an ID unique to the particular shoe 10 (for recognition by the corresponding wrist unit 24), the running total of detected footfalls modulo-16, the running total of time off the ground modulo-200, the currently selected sensitivity level, a "power down" signal (if the shoe circuit has powered down as described above), and an error check sum.

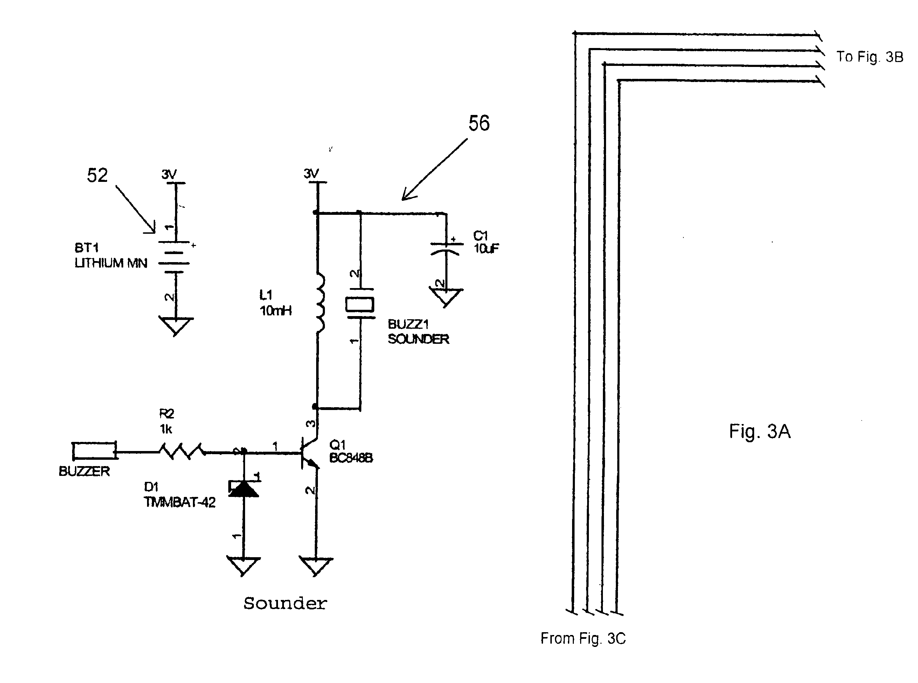

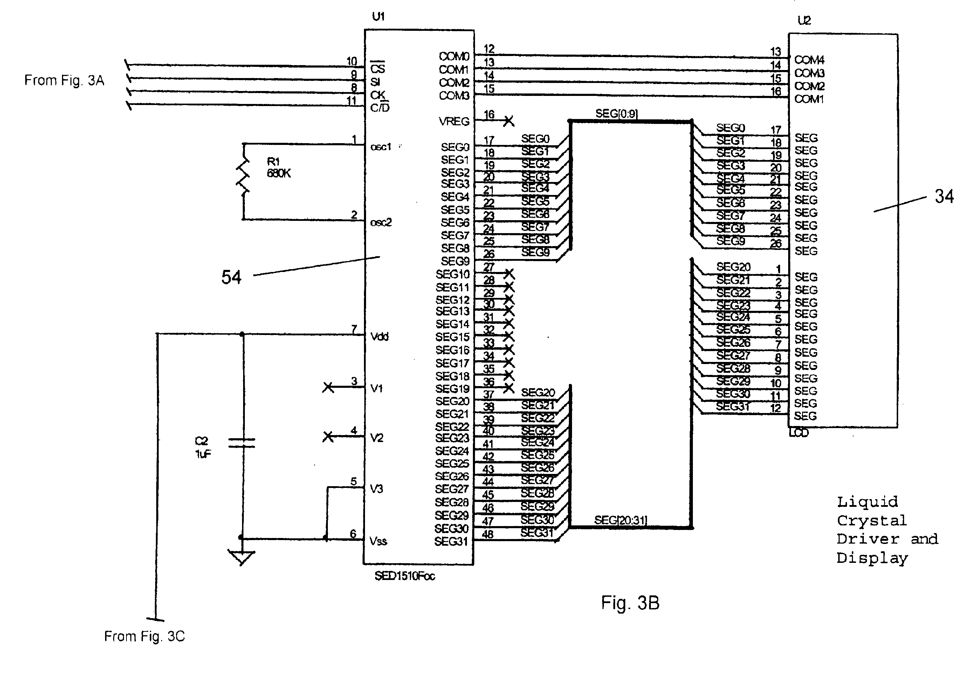

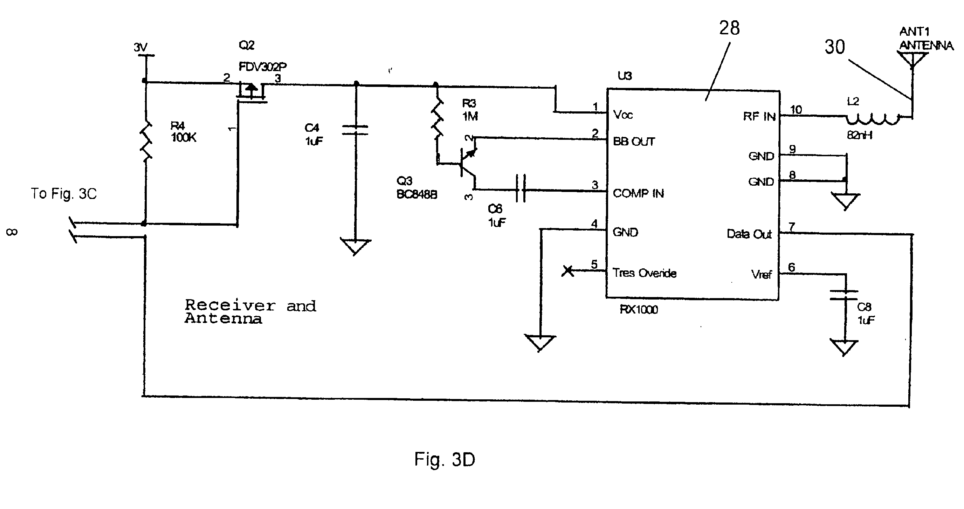

Figs. 3A to 3D show the circuit in the wrist unit 24. The circuit is powered by a single Li-Mn cell 52 (Fig. 3A) and includes a radio receiver 28 (Fig. 3D) and antenna 30 for receiving the data packets 46 transmitted by the transmitter 20. An LCD controller 54 (Fig. 3B) interfaces the microcontroller 32 to the LCD 34.

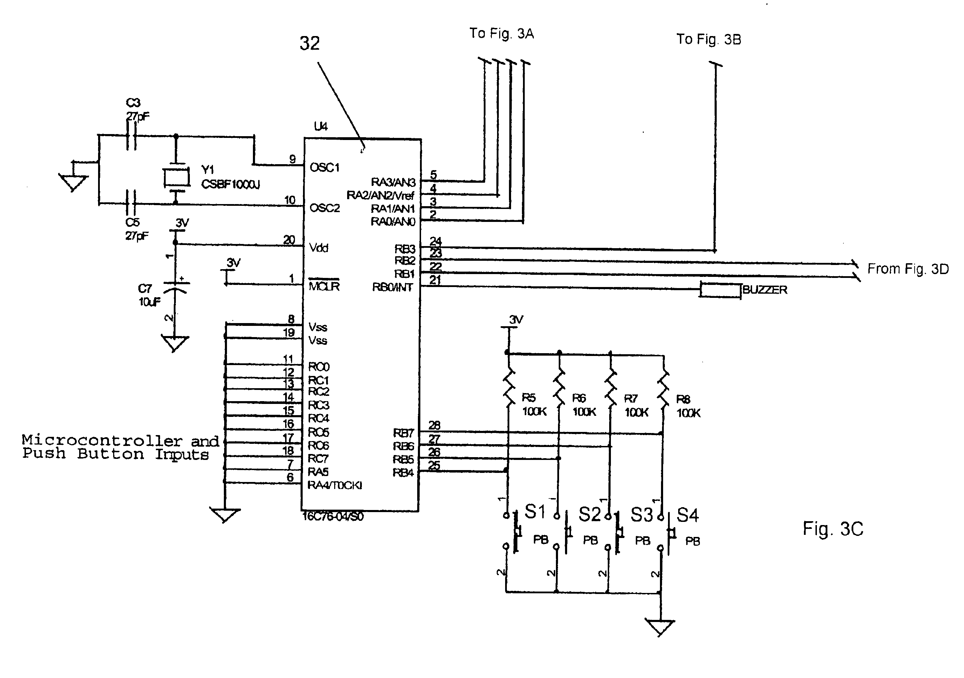

The microcontroller 32 decodes the data in the packets and, knowing the modulo cycles of the transmitter, can readily calculate the running total of footfalls detected by the sensor 12 and the running total of time off the ground (by dividing the latter by the former the average individual time off the ground can easily be calculated). Depending on the mode of operation of the wrist unit, different algorithms are selected to process this data and present it in a form that is suitable for display on the LCD 34. Momentary contact switches S1 to S4 (Fig. 3C), operated by function buttons 36 (Fig. 1), are used to select modes and start tests as required. The wrist unit 24 is capable of signaling to the user the start-stop of tests, as required, by a buzzer 56 (Fig. 3A).

On initial power up, the wrist unit 24 hunts for transmissions by monitoring the RF channel of the shoe transmitter 20 on a continuous basis. Once a valid transmission is identified, that is to say, a data stream with the correct baud rate structure, start and stop bits in the correct locations plus a valid check sum, the wrist unit 24 synchronises with it and monitors the RF channel only when a transmission is expected. In other words, since the microcontroller 32 knows the interval at which the data packets are transmitted (once every second in this embodiment), once the microcontroller is synchronised with the data packets during an initial synchronisation period, it turns on ("powers up") the wrist unit circuit just prior to when it expects to receive a data packet and powers the circuit down just after it has received a data packet. This is shown in Fig. 6A, where the "on" periods 56 of the wrist unit circuit commence a short time "t" before the expected arrival of the next data packet 46. In other words, once every second the wrist unit 24 automatically powers up to create a receiving window just longer than the duration of the data packet. This reduces the current consumption of the wrist unit by an order of magnitude. The microcontroller 32 keeps track of time by counting signals from a crystal controlled oscillator.

Due to the use of modulo counting in the shoe 10, the microcontroller 32 is able to interpolate the data from missing or corrupt data packets, i.e. data packets which it should have, but has not, received. Clearly, since it expects to receive a data packet every second, if it misses one or even several, or if they are corrupt, it will register that fact and can determine the missing number of footfalls and/or the missing time off the ground from the data contained in the next received data packet.

If at any time the wrist unit 24 receives a data packet 46 including a "power down" signal, indicating that the shoe circuit is powering down as described above, the microcontroller 32 will likewise power down the wrist unit circuit.

The microcontroller 32 is programmed to calculate various quantities from the received signal bursts, selected by one of the function buttons 36. According to which button is pressed the microcontroller 32 may simply count the detected footfalls defined by the received signal bursts and display the running total on the LCD 34, or a derivative quantity such as rate of footfall or aerobic functions may be calculated and displayed using established scientific formulae.

The microcontroller 32 may be programmed to convert numbers of footfalls to distance travelled, by operating in a learning mode which measures the total number of footfalls made during a walk or run over a fixed, known distance. From this, the average stride length for a particular user is derived and stored in a permanent memory, and this stride distance can be used in later operation to provide distance travelled as an output.

The wristwatch unit function buttons 36 may also be used to compensate for uphill/downhill gradients (during which the average stride length will be shortened or lengthened) by providing a facility to alter the stride length while running or walking. This may simply enable a selection of "uphill" and "downhill" modes, in which the microcontroller adjusts the average stride length by a fixed percentage (e.g. 10-15%), or it may be more sophisticated, enabling the user to select different degrees of gradients, with the microcontroller adjusting the average stride length accordingly. For example, the user might be allowed to vary the current gradient on a scale of [-5,-4,-3,-2,-1,0,+1,+2,+3,+4,+5], with the microcontroller adding or subtracting a fixed percentage to the average stride length for each step along the scale away from zero.

Apart from calculating numbers of footfalls and distance travelled, the invention may also be used to measure the maximal oxygen intake (maximal VO2 of a subject, which is the maximum amount of oxygen a subject can consume per unit time, and to subsequently display the aerobic workout rate of the subject in terms of the maximal oxygen intake. This enables the user to tailor exercise to a safe level, and to quantitatively ensure a constant workout rate.

Maximal VO2 can be determined using the Cooper's test which determines the maximal VO2 based on the distance a subject can run in twelve minutes (maximal VO2 being a constant multiplied by this distance). The constant, known as Cooper's Constant, can be stored in the memory of the wristwatch unit, and as indicated above, the device may be used to measure both distance travelled and time. Thus, the maximal VO2 may be calculated by the subject personally, and this may be stored in the memory also. Subsequently, exercise output may be calculated and displayed as a proportion of maximal VO2 A useful measure of aerobic capacity is the metabolic equivalent (MET) which is a unit of oxygen consumption per unit time, compensated for bodyweight [1 MET = 3.5 ml/kg/min of oxygen]. If the maximal VO2 is calculated in METs, this will give a useful unit for the subject to measure subsequent exercise levels (e.g. the average 40 year old woman may have a maximal VO2 equivalent of 10 METs, and she may be advised to train at 50% of her capacity, which can easily be done using the device. The device provides the output in METs, and the subject knows she should aim to keep the output at 5 METs.

The invention can also be used to measure anaerobic fitness, using the Bosco jump test, which uses a formula to calculate anaerobic power output in watts from the number of jumps and time spent off the ground during a test period (usually 15 or 45 seconds).

A further way of measuring aerobic fitness is to use the 1 mile walk test, which tests the time taken for the subject to walk 1 mile. By use of the invention, the subject is not limited to carrying out this test at a facility where accurate distance measurement is provided, or in a locality where a 1 mile walk has previously been measured. Because the device measures distance itself, the test can be taken by the subject at any location.

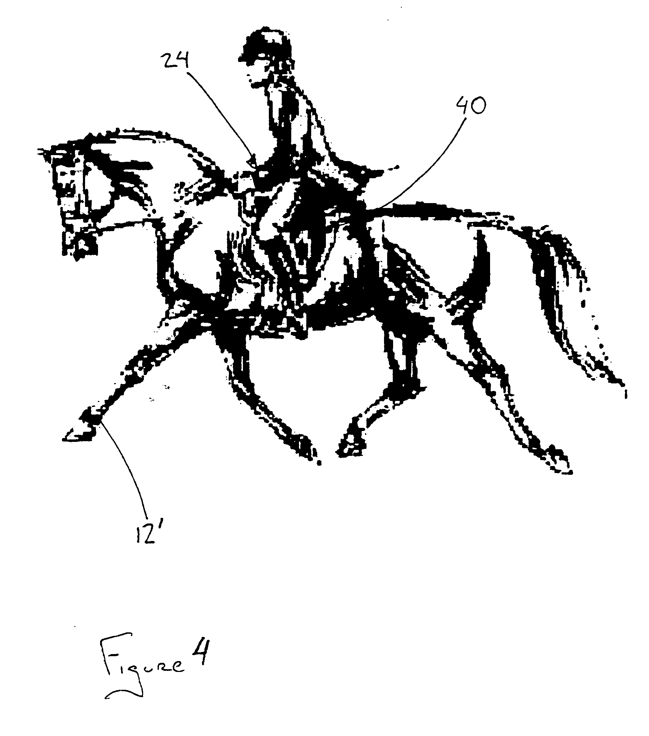

It will be seen that the invention is not limited to the incorporation of the sensor 12 in a shoe. Referring now to Figure 4, in a second embodiment of the invention, a sensor 12' is incorporated in a band adapted to be worn on the foot of a horse whose exercise is to be monitored. The sensor 12' includes similar circuitry to that of Figs. 2A to 2D and transmits an output signal which is picked up by a receiver built into a wrist unit 24 of the type described in relation to Figure 3 worn by a rider.

It will be seen that both embodiments can be further developed to transmit data to, for example, a base station (not shown) where the exercising subject may be remotely monitored. This is particularly useful in the second embodiment, where a GSM transmitter 40 is located in the saddle and is adapted to pick up on the signals transmitted by the sensor 12' or an adapted wrist unit 24. This communication can preferably be implemented using Bluetooth compatible wireless communication - for more information about Bluetooth see http://www.bluetooth.com. The GSM transmitter then relays the data being generated to a base station where the data can be analysed and/or stored.

The invention is not limited to the embodiments described herein which may be modified or varied without departing from the scope of the invention.

## Claims

1. An exercise monitoring apparatus comprising a component arranged to be worn on a foot of a subject whose exercise is to be monitored, the component including a sensor (12) for generating a signal which varies according to the activity of the foot on which the sensor is worn, means (18) for analysing the signal to detect each footfall, and a radio transmitter (20) for transmitting data related to the number of footfalls detected over time in form of a series of data packets, the apparatus further comprising a portable radio receiver (28) for receiving the transmitted data, the receiver further including processing means (32) for calculating a quantity based upon the received data and a display means (34) for displaying the calculated quantity, **characterised in that** the transmitter transmits the series of data packets at fixed intervals, and **in that** synchronising means are provided in the radio receiver such that the radio receiver automatically powers up shortly before a data packet is expected and powers down afterwards.

2. An apparatus as claimed in claim 1, wherein the component comprises an article of human footwear (10).

3. An apparatus as claimed in claim 1, wherein the component comprises a band in which said sensor and transmitter are located and said band is adapted to be worn on the foot of the subject.

4. An apparatus as claimed in claim 1, wherein the radio receiver has a wristband (26) for wearing in the manner of a wristwatch.

5. An apparatus as claimed in claim any preceding claim, wherein each data packet contains data related to the number of footfalls detected since the immediately preceding data packet.

6. An apparatus as claimed in claim 5, wherein each data packet specifies the running total of footfalls counted by modulo counting.

7. An apparatus as claimed in claim any preceding claim, wherein the analysing means is also adapted to detect each foot take-off, and each data packet also contains data related to time off the ground.

8. An apparatus as claimed in claim 7, wherein each data packet specifies the running total of time off the ground counted by modulo counting.

9. An apparatus as claimed in any preceding claim, wherein the sensor is a piezoelectric or piezoresistive device.

10. An apparatus as claimed in any preceding claim, wherein the sensor signal is filtered to remove mains frequency noise.

11. An apparatus as claimed in any preceding claim, wherein the component is adapted to automatically power off if no footfall is detected during a predetermined time period.

12. An apparatus as claimed in any preceding claim, wherein the transmitted data identifies if the component is powered off, and the receiver is likewise adapted to power off automatically in response thereto.

## Patentansprüche

1. Trainingsüberwachungsvorrichtung, die Folgendes umfasst: eine Komponente, die am Fuß einer Person getragen wird, deren Training überwacht werden soll, wobei die Komponente einen Sensor (12) zum Erzeugen eines Signals aufweist, das gemäß der Aktivität des Fußes variiert, an dem der Sensor getragen wird, ein Mittel (18) zum Analysieren des Signals, um jeden Fußauftritt zu erfassen, und einen Funksender (20) zum Senden von Daten in Bezug auf die Anzahl von über die Zeit erfassten Fußauftritten in Form einer Serie von Datenpaketen, wobei die Vorrichtung ferner einen tragbaren Funkempfänger (28) zum Empfangen der gesendeten Daten umfast, wobei der Empfänger ferner ein Verarbeitungsmittel (32) zum Berechnen einer Menge auf der Basis der empfangenen Daten und ein Display (34) zum Anzeigen der berechneten Menge aufweist, **dadurch gekennzeichnet, dass** der Sender die Serie von Datenpaketen in festen Intervallen sendet, und **dadurch**, dass Synchronisationsmittel in dem Funkempfänger vorgesehen sind, so dass der Funkempfänger automatisch einschaltet, kurz bevor ein Datenpaket erwartet wird, und danach wieder abschaltet.

2. Vorrichtung nach Anspruch 1, wobei die Komponente einen Fußbekleidungsartikel (10) für einen Menschen umfasst.

3. Vorrichtung nach Anspruch 1, wobei die Komponente ein Band umfasst, in dem sich der genannte Sensor und der genannte Sender befinden, und das genannte Band so gestaltet ist, dass es am Fuß der Person getragen werden kann.

4. Vorrichtung nach Anspruch 1, wobei der Funkempfänger ein Armband (26) zum Tragen wie eine Armbanduhr hat.

5. Vorrichtung nach einem der vorherigen Ansprüche, wobei jedes Datenpaket Daten in Bezug auf die Anzahl von Fußauftritten beinhaltet, die seit dem unmittelbar vorhergehenden Datenpaket erfasst wurden.

6. Vorrichtung nach Anspruch 5, wobei jedes Datenpaket die laufende Gesamtzahl von Fußauftritten angibt, gezählt durch Modulo-Zählen.

7. Vorrichtung nach einem der vorherigen Ansprüche, wobei das Analysemittel auch die Aufgabe hat, jedes Abheben des Fußes zu erfassen, und jedes Datenpaket auch Daten in Bezug auf die vom Boden abgehobene Zeit enthält.

8. Vorrichtung nach Anspruch 7, wobei jedes Datenpaket die vom Boden abgehobene laufende Gesamtzeit angibt, gezählt durch Modulo-Zählen.

9. Vorrichtung nach einem der vorherigen Ansprüche, wobei der Sensor ein piezoelektrisches oder piezoresistives Bauelement ist.

10. Vorrichtung nach einem der vorherigen Ansprüche, wobei das Sensorsignal gefiltert wird, um Netzfrequenzrauschen zu beseitigen.

11. Vorrichtung nach einem der vorherigen Ansprüche, wobei die Komponente so gestaltet ist, dass sie automatisch abschaltet, wenn während einer vorbestimmten Zeitperiode kein Fußauftritt erfasst wird.

12. Vorrichtung nach einem der vorherigen Ansprüche, wobei die gesendeten Daten identifizieren, wenn die Komponente abgeschaltet ist, und der Empfänger ebenfalls so gestaltet ist, dass er als Reaktion darauf automatisch abschaltet.

## Revendications

1. Un appareil de surveillance d'entraînement sportif comprenant un composant agencé de façon à être porté à un pied d'un sujet dont l'entraînement sportif doit être surveillé, le composant comportant un capteur (12) destiné à générer un signal qui varie en fonction de l'activité du pied sur lequel le capteur est porté, un moyen (18) d'analyser le signal de façon à détecter chaque foulée et un émetteur radio (20) destiné à transmettre des données liées au nombre de foulées détectées au fil du temps sous la forme d'une série de paquets de données, l'appareil comprenant en outre un récepteur radio portatif (28) destiné à recevoir les données transmises, le récepteur comprenant en outre un moyen de traitement (32) destiné à calculer une quantité basée sur les données reçues et un moyen d'affichage (34) destiné à afficher la quantité calculée, **caractérisé en ce que** l'émetteur transmet la série de paquets de données à intervalles fixes et **en ce qu'**un moyen de synchronisation est fourni sur le récepteur radio de sorte que le récepteur radio se met automatiquement sous tension peu de temps avant qu'un paquet de données soit attendu et se met hors tension par la suite.

2. Un appareil selon la Revendication 1, où le composant est muni d'un article chaussant humain (10).

3. Un appareil selon la Revendication 1, où le composant est muni d'une bande sur laquelle lesdits capteur et émetteur sont placés et ladite bande est adaptée de façon à être portée sur le pied du sujet.

4. Un appareil selon la Revendication 1, où le récepteur radio possède un bracelet (26) destiné à être porté à la manière d'une montre-bracelet.

5. Un appareil selon l'une quelconque des Revendications précédentes, où chaque paquet de données contient des données liées au nombre de foulées détectées depuis le paquet de données immédiatement précédent.

6. Un appareil selon la Revendication 5, où chaque paquet de données spécifie le nombre total courant de foulées décomptées par comptage modulo.

7. Un appareil selon l'une quelconque des Revendications précédentes, où le moyen d'analyse est également adapté de façon à détecter chaque décollage du pied du sol, et chaque paquet de données contient également des données liées au temps passé sans contact avec le sol.

8. Un appareil selon la Revendication 7, où chaque paquet de données spécifie le nombre total courant du temps passé sans contact avec le sol décompté par comptage modulo.

9. Un appareil selon l'une quelconque des Revendications précédentes, où le capteur est un dispositif piézoélectrique ou piézorésistif.

10. Un appareil selon l'une quelconque des Revendications précédentes, où le signal du capteur est filtré de façon à supprimer le bruit de fréquence du réseau électrique.

11. Un appareil selon l'une quelconque des Revendications précédentes, où le composant est adapté de façon à se mettre automatiquement hors tension si aucune foulée n'est détectée pendant une période de temps prédéterminée.

12. Un appareil selon l'une quelconque des Revendications précédentes, où les données transmises indiquent si le composant est hors tension, et le récepteur, de la même manière, est adapté de façon à se mettre automatiquement hors tension en réponse à cette indication.
